# EUROPÄISCHE PATENTANMELDUNG

(11) **EP 4 831 578 A1**
(43) Veröffentlichungstag der Anmeldung: **28.10.2026**
(21) Anmeldenummer: 26173289.5
(22) Anmeldetag: 20.04.2026
(51) Int. Cl.: F41H 7/02

(54) **GEPANZERTES FAHRZEUG**

(30) Priorität: 23.04.2025 DE 102025115682
(71) Anmelder: Rheinmetall Landsysteme GmbH, 29345 Südheide (DE)
(72) Erfinder: Hass, Frank, 24235 Wendtorf (DE)
(74) Vertreter: Sonnenberg Harrison Partnerschaft mbB

(57) **Zusammenfassung**

Ein gepanzertes Fahrzeug (1), insbesondere ein Kampfpanzer, mit einer Fahrzeugwanne (2), einem schwenkbar an der Fahrzeugwanne (2) angebrachten Schwingarm (22), einer mit dem Schwingarm (22) gekoppelten Rad- oder Laufrollenachse (20), und einer Exzenterverstelleinrichtung (29) zum Verstellen der Rad- oder Laufrollenachse (20) von einer Betriebsposition (P1) in eine Transportposition (P2) und umgekehrt mit Hilfe eines an dem Schwingarm (22) gelagerten Exzenterelements (45), wobei die Rad- oder Laufrollenachse (20) in der Transportposition (P2) näher an einer Oberseite (4) der Fahrzeugwanne (2) angeordnet ist als in der Betriebsposition (P1).

## Beschreibung

Die vorliegende Erfindung betrifft ein gepanzertes Fahrzeug, insbesondere einen Kampfpanzer.

Für einen Bahntransport von gepanzerten Fahrzeugen, wie beispielsweise Kampfpanzern, müssen vorgegebene Verlademaße eingehalten werden. Diese Verlademaße liegen in Form von sogenannten Begrenzungskurven vor. Passt ein gepanzertes Fahrzeug nicht in eine derartige Begrenzungskurve, kann es erforderlich sein, dass Teile von dem gepanzerten Fahrzeug, vorzugsweise von einem Turm des gepanzerten Fahrzeugs, abgebaut werden müssen. Üblicherweise wird für den Bahntransport alles demontiert, was nicht in die Begrenzungskurve passt. Die Demontage von Komponenten ist jedoch zeitaufwendig, da teilweise ein Kran eingesetzt werden muss.

Ein Absenken des gepanzerten Fahrzeugs über ein verstellbares Kettenlaufwerk reduziert den Montageaufwand oder macht das Einhalten der Begrenzungskurve überhaupt erst möglich. Jedoch bleibt auch bei einem absenkbaren Kettenlaufwerk ein restlicher Demontageaufwand, beispielsweise für Antennen oder sekundäre Waffenstationen. Es existieren Kettenfahrzeuge mit einem hydropneumatischem Kettenlaufwerk, die teilweise auch in der Höhe justiert werden können. Hydropneumatische Kettenlaufwerke sind jedoch kostenintensiv und anfällig für Störungen.

Es ist ferner auch möglich, spezielle Transportketten zu verwenden, welche schmaler sind als Ketten, die im Einsatz genutzt werden. Derartige Transportketten verringern allerdings nur eine Breite des gepanzerten Fahrzeugs, jedoch nicht dessen Höhe.

Vor diesem Hintergrund besteht eine Aufgabe der vorliegenden Erfindung darin, ein verbessertes gepanzertes Fahrzeug zur Verfügung zu stellen.

Demgemäß wird ein gepanzertes Fahrzeug, insbesondere ein Kampfpanzer, vorgeschlagen. Das gepanzerte Fahrzeug umfasst eine Fahrzeugwanne, einen schwenkbar an der Fahrzeugwanne angebrachten Schwingarm, eine mit dem Schwingarm gekoppelte Rad- oder Laufrollenachse und eine Exzenterverstelleinrichtung zum Verstellen der Rad- oder Laufrollenachse von einer Betriebsposition in eine Transportposition und umgekehrt mit Hilfe eines an dem Schwingarm gelagerten Exzenterelements, wobei die Rad- oder Laufrollenachse in der Transportposition näher an einer Oberseite der Fahrzeugwanne angeordnet ist als in der Betriebsposition.

Es ist somit eine Höhenverstellung oder Absenkung des gepanzerten Fahrzeugs möglich. Dadurch, dass das gepanzerte Fahrzeug mit Hilfe der Exzenterverstelleinrichtung abgesenkt werden kann, ist in der Transportposition ein Bahntransport möglich. Ein Demontageaufwand bei einem Verladen des gepanzerten Fahrzeugs mittels Bahntransport kann signifikant reduziert werden. Auf ein kostenintensives und wartungsanfälliges hydropneumatisches Kettenlaufwerk kann verzichtet werden. Die Exzenterverstelleinrichtung ist robust und einfach bedienbar. Eine Nachrüstung vorhandener gepanzerter Fahrzeuge mit der Exzenterverstelleinrichtung ist einfach durchführbar. Die Kinematik eines Kettenlaufwerks des gepanzerten Fahrzeugs bleibt unverändert. Es ergibt sich vorteilhafterweise nur ein geringes Mehrgewicht bei einer kostengünstigen Lösung.

Das gepanzerte Fahrzeug ist vorzugsweise ein Kettenfahrzeug. Das gepanzerte Fahrzeug kann jedoch auch ein Radfahrzeug sein. Darunter, dass das Fahrzeug "gepanzert" ist, ist vorliegend insbesondere zu verstehen, dass das gepanzerte Fahrzeug eine Panzerung, beispielsweise in Form von Panzerplatten, aufweist. Das gepanzerte Fahrzeug kann auch eine reaktive Panzerung aufweisen. Das gepanzerte Fahrzeug, insbesondere die Fahrzeugwanne, ist gegen Beschuss, Sprengfallen, unkonventionelle Spreng- oder Brandvorrichtungen (USBV, Engl.: Improvised Explosive Device, IED), Minen oder dergleichen geschützt.

Dem gepanzerten Fahrzeug ist insbesondere ein Koordinatensystem mit einer ersten Raumrichtung, Längsrichtung oder x-Richtung, einer zweiten Raumrichtung, Querrichtung oder y-Richtung und einer dritten Raumrichtung, Hochrichtung oder z-Richtung zugeordnet. Die Richtungen sind senkrecht zueinander orientiert. Eine Schwerkraftrichtung kann entgegen der z-Richtung orientiert sein. In der Transportposition ist die Rad- oder Laufrollenachse entlang der z-Richtung oder der Schwerkraftrichtung betrachtet oberhalb der Betriebsposition platziert. Die Oberseite der Fahrzeugwanne spannt insbesondere eine Ebene auf, die mit einer von der x-Richtung und der y-Richtung aufgespannten Ebene übereinstimmt oder parallel zu dieser angeordnet ist.

Die Fahrzeugwanne umschließt einen Innenraum, in dem sich eine Besatzung des gepanzerten Fahrzeugs aufhalten kann. Die Fahrzeugwanne weist vorzugsweise eine Unterseite, die der Unterseite abgewandte Oberseite und zwei Seiten auf. Die Unterseite kann auch als Boden der Fahrzeugwanne bezeichnet werden. Die Oberseite kann auch als Decke der Fahrzeugwanne bezeichnet werden. Die Seiten können auch als Seitenwände der Fahrzeugwanne bezeichnet werden.

Das Kettenlaufwerk des gepanzerten Fahrzeug ist beidseits der Fahrzeugwanne an den Seiten angeordnet. Das Kettenlaufwerk umfasst zwei Ketten, die jeweils über eine Vielzahl von Kettenlaufrollen geführt sind. Die Ketten sind beidseits der Fahrzeugwanne an den Seiten der Fahrzeugwanne platziert. Nachfolgend wird auf nur eine Kette eingegangen. Die Exzenterverstelleinrichtung dient der Fahrzeugabsenkung. Die Kette wird von einer frontseitig an der Fahrzeugwanne angeordneten Umlenkrolle umgelenkt und von einer heckseitig an der Fahrzeugwanne angeordneten Antriebsrolle angetrieben. Jeder Kettenlaufrolle ist ein wie zuvor erwähnter Schwingarm mit einer Exzenterverstelleinrichtung zugeordnet.

Der Schwingarm, die Exzenterverstelleinrichtung und die Kettenlaufrolle bilden eine Schwingarmanordnung des gepanzerten Fahrzeugs. Jeder Kettenlaufrolle ist eine derartige Schwingarmanordnung zugeordnet. Die Schwingarmanordnung kann auch als Laufrollenstation bezeichnet werden. Das gepanzerte Fahrzeug weist vorzugsweise eine Vielzahl derartiger Schwingarmanordnungen auf, die beidseits des gepanzerten Fahrzeugs angeordnet sind. Beispielsweise kann das gepanzerte Fahrzeug vierzehn derartige Schwingarmanordnungen aufweisen, die einander gegenüberliegend seitlich paarweise an der Fahrzeugwanne angeordnet sind.

Der Schwingarm kann sich gegenüber der Fahrzeugwanne bewegen, insbesondere verdrehen. Der Schwingarm ist mit Hilfe einer Drehstabfeder mit der Fahrzeugwanne gekoppelt. Der Schwingarm kann so einfedern und ausfedern. Dabei wird die Drehstabfeder tordiert. Die Drehstabfeder ist demgemäß drehfest mit dem Schwingarm verbunden. Die Drehstabfeder ist durch die Fahrzeugwanne hindurchgeführt und verläuft entlang der y-Richtung. Die Drehstabfeder kann auch als Torsionsstab oder Drehstab bezeichnet werden. Es sind mehrere Drehstabfedern vorgesehen, wobei an jeder Drehstabfeder endseitig jeweils ein Schwingarm montiert ist. Jeder Drehstabfeder ist somit ein Paar an Schwingarmen zugeordnet. Ferner ist jedem Paar an Schwingarmen ein Paar an Drehstabfedern zugeordnet.

Die Rad- oder Laufrollenachse trägt ein Rad oder eine Kettenlaufrolle. Für den Fall, dass die Rad- oder Laufrollenachse ein Rad trägt, ist das gepanzerte Fahrzeug ein Radfahrzeug. In diesem Fall kann die Rad- oder Laufrollenachse auch als Radachse bezeichnet werden. Für den Fall, dass an der Rad- oder Laufrollenachse eine wie zuvor erwähnte Kettenlaufrolle gelagert ist, ist das gepanzerte Fahrzeug ein Kettenfahrzeug. In diesem Fall kann die Rad- oder Laufrollenachse auch als Laufrollenachse bezeichnet werden.

Die Kettenlaufrolle ist gegenüber der Rad- oder Laufrollenachse drehbar. Beispielsweise kann die Kettenlaufrolle mit Hilfe einer Wälzlagerung umfassend eines oder mehrere Wälzlager drehbar an der Rad- oder Laufrollenachse gelagert sein. Insbesondere wird mit Hilfe der Exzenterverstelleinrichtung die Rad- oder Laufrollenachse derart verlagert, dass sich eine Symmetrie- oder Mittelachse der Rad- oder Laufrollenachse in der Transportposition näher an der Oberseite der Fahrzeugwanne befindet als in der Betriebsposition.

Zum Verbringen der Rad- oder Laufrollenachse von der Betriebsposition in die Transportposition und umgekehrt wird das Exzenterelement verdreht, wodurch sich die Rad- oder Laufrollenachse von der Betriebsposition in die Transportposition oder umgekehrt bewegt. Dabei vollführt die Mittelachse der Rad- oder Laufrollenachse vorzugsweise eine Bewegung entlang einer gekrümmten Kurve oder Bahnkurve.

Bei dem Verbringen der Rad- oder Laufrollenachse von der Betriebsposition in die Transportposition wird die Mittelachse der Rad- oder Laufrollenachse in Richtung der Oberseite verlagert. Zwischen der Betriebsposition und der Transportposition ist eine beliebige Anzahl von Zwischenpositionen möglich. Es kann also eine stufenlose Höhenverstellung des gepanzerten Fahrzeugs durchgeführt werden.

Unter einem "Exzenterelement" ist vorliegend insbesondere ein Bauteil zu verstehen das dazu geeignet ist, bei einer Bewegung, insbesondere bei einer Drehbewegung, ein mit diesem Bauteil gekoppeltes weiteres Bauteil, vorliegend die Rad- oder Laufrollenachse, mit einer außermittigen oder exzentrischen Bewegung zu bewegen. Die Rad- oder Laufrollenachse bewegt sich somit bei dem Verbringen von der Betriebsposition in die Transportposition bevorzugt nicht entlang einer Geraden, sondern - wie zuvor erwähnt - entlang einer, insbesondere bogenförmig, gekrümmten Bahnkurve. Mit anderen Worten folgt die Rad- oder Laufrollenachse, insbesondere die Mittelachse der Rad- oder Laufrollenachse, bei dem Verbringen oder Bewegen derselben von der Betriebsposition in die Transportposition einer gekrümmten Bahnkurve.

Gemäß einer bevorzugten Weiterbildung wird ein gepanzertes Fahrzeug, insbesondere ein Kampfpanzer, vorgeschlagen. Das gepanzerte Fahrzeug umfasst eine Fahrzeugwanne, einen schwenkbar an der Fahrzeugwanne angebrachten Schwingarm, eine mit dem Schwingarm gekoppelte Rad- oder Laufrollenachse und eine Exzenterverstelleinrichtung, wobei die Exzenterverstelleinrichtung ein um eine Exzenterdrehachse drehbar an dem Schwingarm gelagertes Exzenterelement aufweist, wobei die Rad- oder Laufrollenachse in dem Exzenterelement aufgenommen ist, und wobei eine Mittelachse der Rad- oder Laufrollenachse exzentrisch zu der Exzenterdrehachse angeordnet ist.

Mit anderen Worten sind die Mittelachse der Rad- oder Laufrollenachse und die Exzenterdrehachse parallel zueinander und beabstandet voneinander platziert. Die Mittelachse der Rad- oder Laufrollenachse folgt insbesondere der zuvor erläuterten Bahnkurve, wenn die Rad- oder Laufrollenachse von der Betriebsposition in die Transportposition und umgekehrt gebracht oder bewegt wird. Die Rad- oder Laufrollenachse ist an dem Exzenterelement gelagert und bevorzugt zumindest abschnittsweise innerhalb des Exzenterelements angeordnet.

Gemäß einer Ausführungsform weist das Exzenterelement eine außermittige Achsaufnahme auf, in der die Rad- oder Laufrollenachse aufgenommen ist.

"Außermittig" bedeutet vorliegend, dass eine Symmetrie- oder Mittelachse der Achsaufnahme, welche mit der zuvor erwähnten Mittelachse der Rad- oder Laufrollenachse übereinstimmt, exzentrisch zu der Exzenterdrehachse des Exzenterelements angeordnet ist. Dabei ist das Exzenterelement im Wesentlichen rotationssymmetrisch zu der Exzenterachse aufgebaut. Beispielsweise kann die Rad- oder Laufrollenachse in die Achsaufnahme eingepresst sein. Die Achsaufnahme ist vorzugsweise rohrförmig oder hohlzylinderförmig und umfasst einen mittigen Durchbruch, in dem die Rad- oder Laufrollenachse aufgenommen ist. Vorzugsweise ist die Rad- oder Laufrollenachse an der Achsaufnahme festgelegt. Mit anderen Worten kann sich die Rad- oder Laufrollenachse gegenüber der Achsaufnahme vorzugsweise nicht verdrehen.

Gemäß einer weiteren Ausführungsform weist das Exzenterelement einen ringförmigen Basisabschnitt auf, wobei die Achsaufnahme innerhalb des Basisabschnitts angeordnet ist, und wobei die Achsaufnahme mit Hilfe von Rippen an den Basisabschnitt angebunden ist.

Der Basisabschnitt ist vorzugsweise rotationssymmetrisch zu der zuvor erwähnten Exzenterdrehachse aufgebaut. Der Basisabschnitt umfasst vorzugsweise eine mittige Ausnehmung innerhalb welcher die Achsaufnahme angeordnet ist. Die Achsaufnahme ist außermittig in dieser Ausnehmung angeordnet, so dass die Achsaufnahme zumindest abschnittsweise mit dem Basisabschnitt verbunden ist. Zusätzlich ist die Achsaufnahme mit Hilfe der Rippen mit dem Basisabschnitt verbunden. Die Ausnehmung dient im Wesentlichen der Gewichtsreduktion, wobei die Rippen der Versteifung des Exzenterelements dienen. Das Exzenterelement ist ein einstückiges, insbesondere ein materialeinstückiges, Bauteil. "Einstückig" oder "einteilig" heißt vorliegend, dass das Exzenterelement nicht aus unterschiedlichen Unterbauteilen zusammengesetzt ist, sondern, dass der Basisabschnitt, die Achsaufnahme und die Rippen ein gemeinsames Bauteil, nämlich das Exzenterelement, bilden. "Materialeinstückig" heißt vorliegend, dass das Exzenterelement durchgehend aus dem gleichen Werkstoff gefertigt ist. Beispielsweise kann das Exzenterelement aus einer Aluminiumlegierung oder aus einer Stahllegierung gefertigt sein.

Gemäß einer weiteren Ausführungsform ist der Achsaufnahme und der Rad- oder Laufrollenachse eine gemeinsame Mittelachse zugeordnet, wobei dem Exzenterelement eine Exzenterdrehachse zugeordnet ist, um die das Exzenterelement drehbar an dem Schwingarm gelagert ist, und wobei die Mittelachse exzentrisch zu der Exzenterdrehachse angeordnet ist.

Mit anderen Worten verlaufen die Mittelachse und die Exzenterdrehachse parallel zueinander, sind jedoch beabstandet voneinander angeordnet. Die Mittelachse und die Exzenterdrehachse verlaufen vorzugsweise parallel zu der y-Richtung.

Gemäß einer weiteren Ausführungsform weist das Exzenterelement eine um die Exzenterdrehachse umlaufende Außenverzahnung, insbesondere eine Schrägverzahnung, auf, wobei die Exzenterverstelleinrichtung ein Exzenterverstellelement aufweist, das in die Außenverzahnung eingreift, und wobei das Exzenterverstellelement drehbar an dem Schwingarm gelagert ist.

Zum Aufnehmen des Exzenterverstellelements ist vorzugsweise eine Aufnahmebohrung in den Schwingarm eingebracht. Die Außenverzahnung ist vorzugsweise an dem zuvor erwähnten ringförmigen Basisabschnitt angeformt. Bei einem Verdrehen des Exzenterverstellelements treibt dieses das Exzenterelement über die Schrägverzahnung an, um dieses gegenüber dem Schwingarm zu verdrehen. Hierdurch wird die Rad- oder Laufrollenachse von der Betriebsposition in die Transportposition und umgekehrt verbracht. Das Exzenterverstellelement umfasst vorzugsweise einen schraubenförmigen Spindelabschnitt, welcher formschlüssig in die Außenverzahnung des Exzenterelements eingreift. Eine formschlüssige Verbindung entsteht durch das Ineinander- oder Hintergreifen von zwei Bauteilen, vorliegend dem Spindelabschnitt und der Außenverzahnung.

Gemäß einer weiteren Ausführungsform bilden das Exzenterverstellelement und die Außenverzahnung ein selbsthemmendes Schneckengetriebe.

Darunter, dass das Schneckengetriebe "selbsthemmend" ist, ist vorliegend insbesondere zu verstehen, dass es nur möglich ist, das Exzenterelement mit Hilfe des Exzenterverstellelements anzutreiben, wobei ein Antrieb des Exzenterverstellelements mit Hilfe des Exzenterelements nicht möglich ist. Mit anderen Worten kann sich das Exzenterelement nicht ungewollt verdrehen. Das Schneckengetriebe ist Teil der Exzenterverstelleinrichtung.

Gemäß einer weiteren Ausführungsform ist das Schneckengetriebe innerhalb des Schwingarms angeordnet.

Dies schließt nicht aus, dass ein Teil des Schneckengetriebes, beispielsweise ein Teil des Exzenterverstellelements, über den Schwingarm hinausragt. Dadurch, dass das Schneckengetriebe innerhalb des Schwingarms angeordnet ist, ist dieses vor Verschmutzungen und Beschädigungen geschützt.

Gemäß einer weiteren Ausführungsform weist das Exzenterverstellelement einen Greifabschnitt, insbesondere einen Außensechskant, auf, der mit Hilfe eines Standardwerkzeugs greifbar ist.

Unter einem "Standardwerkzeug" ist vorliegend insbesondere ein Commercial Off-The-Shelf (COTS) oder kommerzielles Produkt aus dem Regal zu verstehen. Beispielsweise kann eine Handratsche, eine Akkuratsche oder ein Gabelschlüssel zum Verstellen des Exzenterverstellelements eingesetzt werden. Der Greifabschnitt kann beispielsweise auch ein Außenvierkant, ein Innensechskant oder dergleichen sein.

Gemäß einer weiteren Ausführungsform weist der Schwingarm einen Exzenteraufnahmeabschnitt auf, an dem das Exzenterelement gelagert ist, wobei der Exzenteraufnahmeabschnitt in einen ersten Klemmarm und einen zweiten Klemmarm unterteilt ist, und wobei der erste Klemmarm und/oder der zweite Klemmarm zum kraftschlüssigen Festlegen des Exzenterelements an dem Exzenteraufnahmeabschnitt mit Hilfe eines Klemmelements elastisch verformbar sind.

Der Exzenteraufnahmeabschnitt ist vorzugsweise rohrförmig oder hohlzylinderförmig. Innerhalb des Exzenteraufnahmeabschnitts ist die Exzenterverstelleinrichtung angeordnet. Vorzugsweise umfasst der Schwingarm einen stabförmigen Basisabschnitt, aus welchem sich der Exzenteraufnahmeabschnitt herauserstreckt. Der erste Klemmarm und der zweite Klemmarm sind mit diesem Basisabschnitt verbunden, wobei der erste Klemmarm und der zweite Klemmarm nur mit Hilfe des Klemmelements miteinander verbunden sind. Das Klemmelement kann beispielsweise eine Schraube sein. Darunter, dass die Klemmarme "elastisch", insbesondere "federelastisch", verformbar sind, ist vorliegend insbesondere zu verstehen, dass die Klemmarme durch das Aufbringen von Kräften von einem unverformten Zustand in einen verformten Zustand verformt werden können. Wirken diese Kräfte nicht mehr auf die Klemmarme, so verbringen sich die Klemmarme selbstständig oder selbsttätig aus dem verformten Zustand zurück in den unverformten Zustand. Unter einem "kraftschlüssigen Festlegen" ist vorliegend zu verstehen, dass das Exzenterelement zwischen den Klemmarmen geklemmt wird, so dass das Exzenterelement gegenüber dem Exzenteraufnahmeabschnitt nicht mehr verdreht werden kann. Dies führt dazu, dass bei einer Belastung des Exzenterelements, beispielsweise durch ein Drehmoment, keine Kräfte auf das Exzenterverstellelement wirken, da eine Kraftübertragung zwischen dem Exzenterelement und dem Exzenteraufnahmeabschnitt ausschließlich über eine zwischen dem Exzenterelement und den Klemmarmen gebildete kraftschlüssige Verbindung übertragen wird.

Gemäß einer weiteren Ausführungsform weist das Exzenterelement eine zylinderförmige Außenklemmfläche auf, wobei der Exzenteraufnahmeabschnitt eine zylinderförmige Innenklemmfläche aufweist, und wobei das Exzenterelement mit Hilfe der Außenklemmfläche an der Innenklemmfläche gelagert ist.

Die zylinderförmige Außenklemmfläche ist vorzugsweise an dem zuvor erwähnten Basisabschnitt des Exzenterelements vorgesehen. Die zylinderförmige Außenklemmfläche ist rotationssymmetrisch zu der Exzenterdrehachse aufgebaut. Die Innenklemmfläche des Exzenteraufnahmeabschnitts ist rotationssymmetrisch zu einer dem Exzenteraufnahmeabschnitt zugeordneten Symmetrie- oder Mittelachse aufgebaut. Diese zuletzt genannte Mittelachse und die Exzenterdrehachse stimmen vorzugsweise überein. Die zuvor erwähnte kraftschlüssige Verbindung wird zwischen der Außenklemmfläche des Exzenterelements und der Innenklemmfläche des Exzenteraufnahmeabschnitts verwirklicht. Demgemäß ist die Innenklemmfläche an die beiden Klemmarme angeformt oder auf diese aufgeteilt.

Gemäß einer weiteren Ausführungsform weist die Exzenterverstelleinrichtung ein lösbar mit dem Exzenterelement verbundenes Abdeckelement auf, wobei der Exzenteraufnahmeabschnitt zumindest abschnittsweise zwischen dem Exzenterelement und dem Abdeckelement angeordnet ist.

Das Abdeckelement ist vorzugsweise plattenförmig. Das Abdeckelement weist in einer Draufsicht vorzugsweise eine kreisförmige Geometrie auf. Das Abdeckelement ist insbesondere mit dem Exzenterelement verschraubt. Das Exzenterelement weist vorzugsweise einen plattenförmigen Abdeckabschnitt auf, welcher an dem Exzenteraufnahmeabschnitt anliegt. Auch das Abdeckelement liegt an dem Exzenteraufnahmeabschnitt an. Somit ist der Exzenteraufnahmeabschnitt zwischen dem Abdeckabschnitt und dem Abdeckelement angeordnet.

Gemäß einer weiteren Ausführungsform sind das Exzenterelement und das Abdeckelement fluiddicht gegenüber dem Exzenteraufnahmeabschnitt abgedichtet.

Hierzu sind Dichtelemente, beispielsweise in Form von O-Ringen, vorgesehen. Das Exzenterelement kann an seinem Abdeckabschnitt eine Nut zur Aufnahme eines derartigen Dichtelements aufweisen. Auch das Abdeckelement kann eine derartige Nut aufweisen. Durch die fluiddichte Abdichtung kann verhindert werden, dass Staub, Wasser oder andere Flüssigkeiten in die Exzenterverstelleinrichtung eindringen können.

Gemäß einer weiteren Ausführungsform weist das Abdeckelement einen außermittigen Durchbruch auf, durch den die Rad- oder Laufrollenachse hindurchgeführt ist.

Der Durchbruch ist insbesondere rotationssymmetrisch zu der Mittelachse der Achsaufnahme des Exzenterelements aufgebaut. Die Achsaufnahme ist ebenfalls durch den Durchbruch hindurchgeführt.

Gemäß einer weiteren Ausführungsform weist der Schwingarm eine Markierung auf, an der ablesbar ist, ob sich die Rad- oder Laufrollenachse in der Betriebsposition oder in der Transportposition befindet.

Die Markierung kann beispielsweise ein an den Schwingarm, insbesondere an den Exzenteraufnahmeabschnitt, angeformtes pfeilförmiges Element sein. Das Abdeckelement weist vorzugsweise umfänglich einen schlitzförmige Ausschnitt auf. Beispielsweise zeigt eine Spitze der Markierung in der Betriebsposition auf den Ausschnitt des Abdeckelements. Somit kann mit Hilfe der Markierung abgelesen werden, dass sich die Rad- oder Laufrollenachse in der Betriebsposition befindet.

Gemäß einer weiteren Ausführungsform weist das gepanzerte Fahrzeug eine Kettenlaufrolle auf, die drehbar an der Rad- oder Laufrollenachse gelagert ist, wobei die Exzenterverstelleinrichtung innerhalb der Kettenlaufrolle angeordnet ist.

Hierdurch wird die Exzenterverstelleinrichtung beispielsweise vor Steinen oder Ähnlichem geschützt. Die Exzenterverstelleinrichtung kann jedoch zumindest abschnittsweise auch außerhalb der Kettenlaufrolle angeordnet sein. Die Kettenlaufrolle umfasst vorzugsweise einen Laufrollenkörper, der über eine Laufrollennabe drehbar mit der Rad- oder Laufrollenachse verbunden ist. Der Laufrollenkörper umfasst insbesondere eine topfförmige Ausnehmung, in welcher die Exzenterverstelleinrichtung angeordnet ist.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zahlwort ist nicht dahingehend zu verstehen, dass eine Beschränkung auf genau die genannte Anzahl von Elementen gegeben ist. Vielmehr sind zahlenmäßige Abweichungen nach oben und unten möglich, soweit nichts Gegenteiliges angegeben ist.

Weitere mögliche Implementierungen des gepanzerten Fahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des gepanzerten Fahrzeugs hinzufügen.

Weitere vorteilhafte Ausgestaltungen und Aspekte des gepanzerten Fahrzeugs sind Gegenstand der Unteransprüche sowie der im Folgenden beschriebenen Ausführungsbeispiele des gepanzerten Fahrzeugs. Im Weiteren wird das gepanzerte Fahrzeug anhand von bevorzugten Ausführungsformen unter Bezugnahme auf die beigelegten Figuren näher erläutert.
- Fig. 1: zeigt eine schematische Seitenansicht einer Ausführungsform eines gepanzerten Fahrzeugs;
- Fig. 2: zeigt eine schematische perspektivische Ansicht einer Ausführungsform einer Schwingarmanordnung für das gepanzerte Fahrzeug gemäß Fig. 1;
- Fig. 3: zeigt eine schematische perspektivische Ansicht einer Ausführungsform eines Schwingarms für die Schwingarmanordnung gemäß Fig. 2;
- Fig. 4: zeigt eine perspektivische Ansicht einer Ausführungsform einer Exzenterverstelleinrichtung für die Schwingarmanordnung gemäß Fig. 2;
- Fig. 5: zeigt eine schematische perspektivische Ansicht einer Ausführungsform eines Exzenterelements für die Exzenterverstelleinrichtung gemäß Fig. 4; und
- Fig. 6: zeigt eine schematische perspektivische Ansicht einer Ausführungsform eines Abdeckelements für die Exzenterverstelleinrichtung gemäß Fig. 4.

In den Figuren sind gleiche oder funktionsgleiche Elemente mit denselben Bezugszeichen versehen worden, sofern nichts anderes angegeben ist.

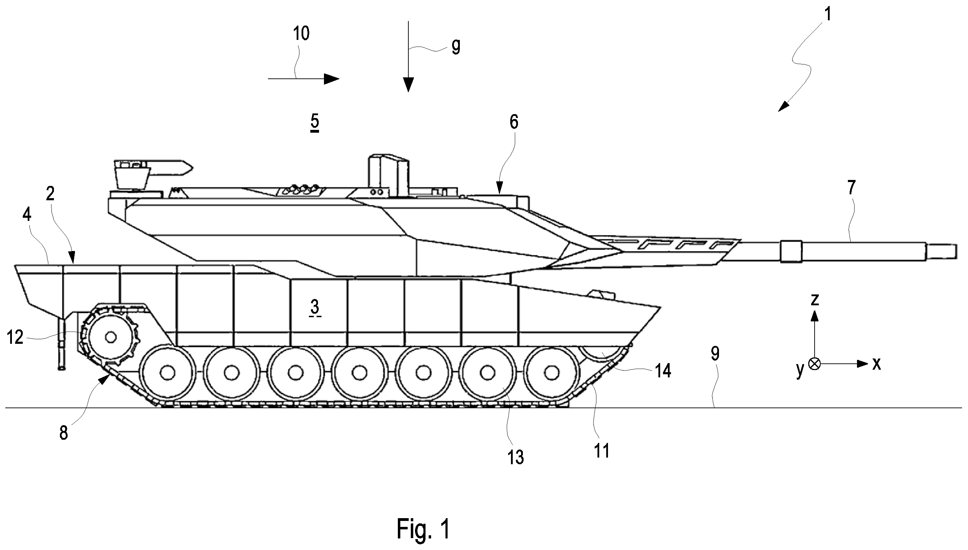

Die Fig. 1 zeigt eine schematische Seitenansicht einer Ausführungsform eines gepanzerten Fahrzeugs 1.

Das gepanzerte Fahrzeug 1 ist ein militärisches gepanzertes Fahrzeug. Das gepanzerte Fahrzeug 1 ist ein hochgeschütztes gepanzertes Fahrzeug. Hierzu weist das gepanzerte Fahrzeug 1 eine Panzerung auf. Insbesondere kann das gepanzerte Fahrzeug 1 ein Kampfpanzer sein. Das gepanzerte Fahrzeug 1 kann jedoch auch ein Schützenpanzer, ein Bergepanzer oder dergleichen sein. Das gepanzerte Fahrzeug 1 ist bewaffnet.

Dem gepanzerten Fahrzeug 1 ist ein Koordinatensystem mit einer ersten Raumrichtung, Längsrichtung oder x-Richtung x, einer zweiten Raumrichtung, Querrichtung oder y-Richtung y und einer dritten Raumrichtung, Hochrichtung oder z-Richtung z zugeordnet. Die Richtungen x, y, z sind senkrecht zueinander orientiert. Eine Schwerkraftrichtung g kann entgegen der z-Richtung z orientiert sein.

Das gepanzerte Fahrzeug 1 umfasst eine geschützte Fahrzeugwanne 2, in der eine Besatzung des gepanzerten Fahrzeugs 1 Platz findet. Die Fahrzeugwanne 2 ist gegen Beschuss, Sprengfallen, unkonventionelle Spreng- oder Brandvorrichtungen (USBV, Engl.: Improvised Explosive Device, IED), Minen oder dergleichen geschützt. Die Fahrzeugwanne 2 umschließt einen Innenraum 3, in dem sich die Besatzung aufhalten kann.

Die Fahrzeugwanne 2 weist eine in der Orientierung der Fig. 1 nach oben weisende Decke oder Oberseite 4 auf. Die Oberseite 4 kann zumindest abschnittsweise eben und zumindest abschnittsweise geneigt sein. Über Luken oder Türen kann der Innenraum 3 der Fahrzeugwanne 2 von einer Umgebung 5 des gepanzerten Fahrzeugs 1 aus betreten und wieder verlassen werden.

Das gepanzerte Fahrzeug 1 kann einen über die Oberseite 4 hinausragenden Turm 6 mit einer Waffe oder Bewaffnung 7 aufweisen. Der Turm 6 kann auch einen Teil des Innenraums 3 umschließen. Somit kann der Innenraum 3 auch zumindest abschnittsweise außerhalb der Fahrzeugwanne 2, nämlich in dem Turm 6, angeordnet sein. Der Turm 6 ist drehbar an der Fahrzeugwanne 2 gelagert. Der Turm 6 kann einen elektrischen oder hydraulischen Antrieb umfassen, um den Turm 6 zu drehen. Der Turm 6 kann jedoch auch manuell betrieben werden, falls der Antrieb ausfällt.

Die Bewaffnung 7 kann eine Glattrohrkanone sein. Die Bewaffnung 7 kann eine Primärbewaffnung oder Hauptbewaffnung des gepanzerten Fahrzeugs 1 sein. Beispielsweise kann die Bewaffnung 7 ein Kaliber von 130 mm aufweisen. Es kann zusätzlich eine Sekundärbewaffnung, beispielsweise ein Form eines Maschinengewehrs, vorgesehen sein.

Das gepanzerte Fahrzeug 1 umfasst ferner ein Kettenlaufwerk 8, mit dessen Hilfe sich das gepanzerte Fahrzeug 1 auf einem Untergrund 9 in einer Fahrtrichtung 10 fortbewegen kann. Dies schließt jedoch nicht aus, dass sich das gepanzerte Fahrzeug 1, beispielsweise in einem Rückwärtsgang, auch entgegengesetzt zu der Fahrtrichtung 10 fortbewegen kann. In der Orientierung der Fig. 1 ist die Fahrtrichtung 10 entlang der x-Richtung x orientiert.

Das Kettenlaufwerk 8 umfasst eine umlaufende Kette 11, die von einer Antriebsrolle 12 angetrieben wird. Die Antriebsrolle 12 ist heckseitig vorgesehen. In der Orientierung der Fig. 1 läuft die Kette 11 bei einer Fortbewegung des gepanzerten Fahrzeugs 1 in der Fahrtrichtung 10 im Uhrzeigersinn um. Die Kette 11 kann eine Vielzahl miteinander verbundener Kettenglieder aufweisen, die beweglich miteinander verbunden sind. Die Kettenglieder sind aus einem metallischen Werkstoff, wie beispielsweise Stahl, gefertigt. Die Kette 11 kann jedoch auch eine Gummikette sein oder Elemente aus Gummi aufweisen.

Die Antriebsrolle 12 ist mit einem Antrieb des gepanzerten Fahrzeugs 1 wirkverbunden. Der Antrieb kann beispielsweise einen Verbrennungsmotor, insbesondere einen Dieselmotor, und ein Getriebe umfassen. Ferner umfasst das Kettenlaufwerk 8 eine Vielzahl von Kettenlaufrollen 13, von denen in der Fig. 1 nur eine mit einem Bezugszeichen versehen ist. Beispielsweise sind jeweils beidseits des gepanzerten Fahrzeugs 1 sieben derartige Kettenlaufrollen 13 vorgesehen. Die Anzahl der Kettenlaufrollen 13 ist jedoch grundsätzlich beliebig. Weiterhin umfasst das Kettenlaufwerk 8 eine Umlenkrolle 14. Die Umlenkrolle 14 ist frontseitig vorgesehen. Umgekehrt kann die Antriebsrolle 12 auch frontseitig und die Umlenkrolle 14 heckseitig angeordnet sein.

Das Kettenlaufwerk 8 umfasst vorzugsweise zwei Ketten 11, die entlang der Fahrtrichtung 10 betrachtet beidseits des gepanzerten Fahrzeugs 1 angeordnet sind. Dementsprechend umfasst das Kettenlaufwerk 8 auch ein Paar beidseits des gepanzerten Fahrzeugs 1 angeordneter Antriebsrollen 12, eine beliebige Anzahl von Kettenlaufrollen 13, die ebenfalls beidseits des gepanzerten Fahrzeugs 1 angeordnet sind, sowie ein Paar an Umlenkrollen 14. Das Kettenlaufwerk 8 ist höhenverstellbar, wie nachfolgend noch erläutert wird.

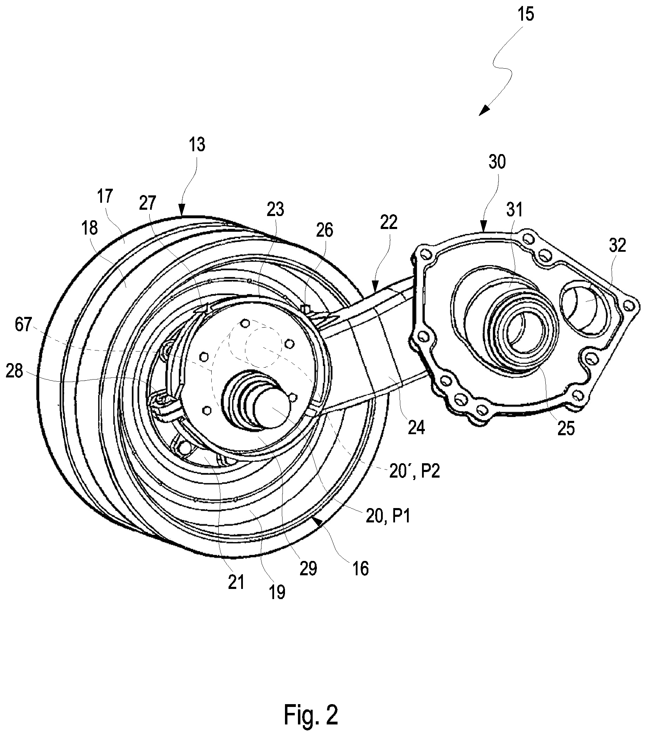

Die Fig. 2 zeigt eine schematische perspektivische Ansicht einer Ausführungsform einer Schwingarmanordnung 15 für das gepanzerte Fahrzeug 1.

Jeder wie zuvor erwähnten Kettenlaufrolle 13 ist eine derartige Schwingarmanordnung 15 zugeordnet. Das heißt insbesondere, dass eine Anzahl der Kettenlaufrollen 13 und eine Anzahl der Schwingarmanordnung 15 identisch ist. Beispielsweise weist das gepanzerte Fahrzeug 1 vierzehn derartige Schwingarmanordnungen 15 auf, die paarweise und außenseitig beidseits der Fahrzeugwanne 2 platziert sind. Nachfolgend wird jedoch auf nur eine Schwingarmanordnung 15 Bezug genommen. Die Schwingarmanordnung 15 kann auch als Exzenterschwingarmanordnung bezeichnet werden. Ferner kann die Schwingarmanordnung 15 auch als Laufrollenstation bezeichnet werden.

Die in der Fig. 2 exemplarisch gezeigte Kettenlaufrolle 13 ist Teil der Schwingarmanordnung 15. Dabei ist die Schwingarmanordnung 15 Teil des Kettenlaufwerks 8. Anstelle der Kettenlaufrolle 13 kann jedoch auch ein nicht gezeigtes Rad eines nicht gezeigten gepanzerten Fahrzeugs, das in diesem Fall ein Radfahrzeug ist, Teil der Schwingarmanordnung 15 sein.

Die Kettenlaufrolle 13 umfasst einen zweiteiligen Laufrollenkörper 16, der eine erste Laufrollenbandage 17 und eine zweite Laufrollenbandage 18 trägt. Die Laufrollenbandagen 17, 18 laufen vollständig um den Laufrollenkörper 16 um. Die Laufrollenbandagen 17, 18 sind aus einem Elastomer, insbesondere aus Gummi, gefertigt. Beispielsweise sind die Laufrollenbandagen 17, 18 aus einem natürlichen oder einem synthetischen Kautschuk gefertigt. Der Kettenlaufrollenkörper 16 weist in der Orientierung der Fig. 2 jeweils eine nach hinten und eine nach vorne gerichtete Vertiefung oder Ausnehmung 19 auf.

Die Kettenlaufrolle 13, insbesondere der Laufrollenkörper 16, ist an einer Rad- oder Laufrollenachse 20 drehbar gelagert. Hierzu kann der Laufrollenkörper 16 mit Hilfe einer Laufrollennabe 21, welche beispielsweise eines oder mehrere Wälzlager aufweisen kann, mit der Rad- oder Laufrollenachse 20 gekoppelt sein. Die Kettenlaufrolle 13 rotiert somit um die feststehende Rad- oder Laufrollenachse 20. Die Rad- oder Laufrollenachse 20 ist Teil der Schwingarmanordnung 15.

Die Schwingarmanordnung 15 umfasst weiterhin einen Schwingarm 22, dessen Aufbau nachfolgend noch erläutert wird. Der Schwingarm 22 umfasst einen zumindest abschnittsweise rohrförmigen oder hohlzylinderförmigen Exzenteraufnahmeabschnitt 23, einen stegförmigen oder stabförmigen Basisabschnitt 24 sowie einen sich aus dem Basisabschnitt 24 herauserstreckenden Kopplungsabschnitt 25. Der Exzenteraufnahmeabschnitt 23 und der Kopplungsabschnitt 25 sind jeweils endseitig an dem Basisabschnitt 24 vorgesehen. Der Basisabschnitt 24 ist somit zwischen dem Exzenteraufnahmeabschnitt 23 und dem Kopplungsabschnitt 25 angeordnet. Der Schwingarm 22 kann ein nachbearbeitetes Gussbauteil sein.

Der Exzenteraufnahmeabschnitt 23 trägt ein Exzenterverstellelement 26, eine Markierung 27 sowie ein Klemmelement 28, das eine Schraube sein kann. Die Markierung 27 kann ein an den Exzenteraufnahmeabschnitt 23 angeformtes pfeilförmiges Symbol sein. Ein Aufbau und eine Funktion des Exzenterverstellelements 26 wird nachfolgend noch erläutert.

In dem Exzenteraufnahmeabschnitt 23 ist eine Exzenterverstelleinrichtung 29 aufgenommen. Die Exzenterverstelleinrichtung 29 ist Teil der Schwingarmanordnung 15. Die Exzenterverstelleinrichtung 29 trägt die Rad- oder Laufrollenachse 20, so dass die Rad- oder Laufrollenachse 20 mit Hilfe der Exzenterverstelleinrichtung 29 mit dem Exzenteraufnahmeabschnitt 23 und damit auch mit dem Schwingarm 22 gekoppelt ist. Mit anderen Worten ist die Rad- oder Laufrollenachse 20 an der Exzenterverstelleinrichtung 29 gelagert, wobei die Exzenterverstelleinrichtung 29 wiederum an dem Schwingarm 22, insbesondere an dem Exzenteraufnahmeabschnitt 23, gelagert ist. Die Exzenterverstelleinrichtung 29 ist innerhalb der Ausnehmung 19 des Laufrollenkörpers 16 platziert.

Der Schwingarm 22 ist mit seinem Kopplungsabschnitt 25 mit einem Schwingarmkopplungselement 30 verbunden. Das Schwingarmkopplungselement 30 kann außenseitig mit der Fahrzeugwanne 2 fest verbunden, insbesondere verschraubt, sein. Das Schwingarmkopplungselement 30 umfasst einen rohrförmigen ersten Aufnahmeabschnitt 31, in welchem der Kopplungsabschnitt 25 des Schwingarms 22 aufgenommen ist. Der Kopplungsabschnitt 25 ist mit Hilfe einer nicht gezeigten Lagerung, insbesondere einer Wälzlagerung, drehbar in dem ersten Aufnahmeabschnitt 31 gelagert.

Der Kopplungsabschnitt 25 ist in dem Aufnahmeabschnitt 31 aufgenommen, wobei in dem Kopplungsabschnitt 25 wiederum eine nicht gezeigte Drehstabfeder des Kettenlaufwerks 8 aufgenommen und drehfest mit dem Kopplungsabschnitt 25 verbunden ist. Die Drehstabfeder kann auch als Torsionsstab oder Drehstab bezeichnet werden. Die Drehstabfeder ist entlang der y-Richtung y durch die Fahrzeugwanne 2 hindurchgeführt. Das Schwingarmkopplungselement 30 umfasst weiterhin einen zweiten Aufnahmeabschnitt 32, in dem eine weitere Drehstabfeder des Kettenlaufwerks 8 aufgenommen ist. Diese ist ebenfalls entlang der y-Richtung y durch die Fahrzeugwanne 2 hindurchgeführt und drehfest mit dem zweiten Aufnahmeabschnitt 32 verbunden.

Die Schwingarmanordnung 15 umfasst weiterhin einen nicht gezeigten Endanschlagdämpfer. Der Endanschlagdämpfer ist ein hydropneumatischer Dämpfer. Der Endanschlagdämpfer ist an der Fahrzeugwanne 2 befestigt. Der Endanschlagdämpfer hat in einer ausgefederten Position des Schwingarms 22 keinen Kontakt mit der Rad- oder Laufrollenachse 20 und legt sich mit zunehmender Einfederung an der Rad- oder Laufrollenachse 20, um dann in einer eingefederten Position des Schwingarms 22 komprimiert zu werden.

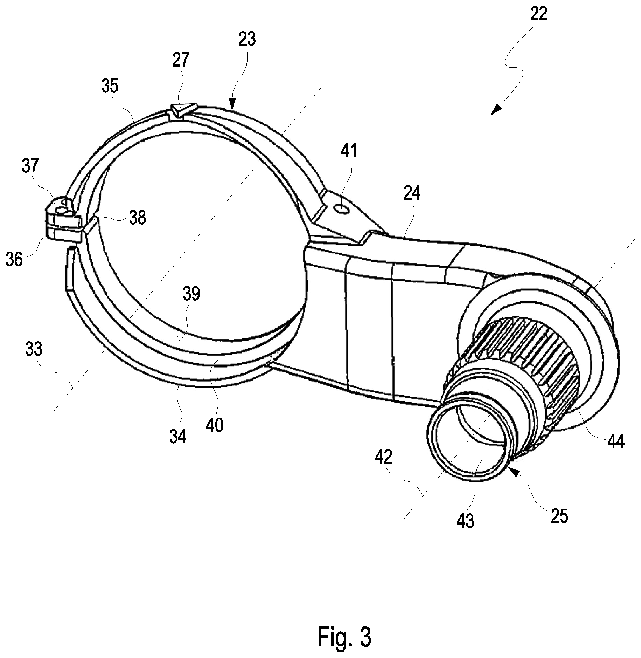

Die Fig. 3 zeigt eine schematische perspektivische Ansicht einer Ausführungsform eines wie zuvor erwähnten Schwingarms 22.

Der Exzenteraufnahmeabschnitt 23 des Schwingarms 22 ist rotationssymmetrisch zu einer Symmetrie- oder Mittelachse 33 aufgebaut. Der Exzenteraufnahmeabschnitt 23 ist in einen bogenförmigen oder halbkreisförmigen ersten Klemmarm 34 sowie in einen bogenförmigen oder halbkreisförmigen zweiten Klemmarm 35 unterteilt. Die Klemmarme 34, 35 sind mit dem Basisabschnitt 24 verbunden. Die Klemmarme 34, 35 sind jedoch nicht direkt miteinander verbunden. Die Klemmarme 34, 35 sind federelastisch verformbar. Das heißt, dass die Klemmarme 34, 35 jeweils durch ein Einwirken einer Kraft von einem unverformten Zustand in einen verformten Zustand gebracht werden können. Hierbei bewegen sich die Klemmarme 34, 35 radial auf die Mittelachse 33 zu. Wirkt diese Kraft nicht mehr, so verformen sich die Klemmarme 34, 35 selbstständig von dem verformten Zustand zurück in den unverformten Zustand.

Endseitig weisen der erste Klemmarm 34 und der zweite Klemmarm 35 jeweils einen plattenförmigen Klemmabschnitt 36, 37 auf. Die Klemmabschnitte 36, 37 können mit Hilfe des zuvor erwähnten Klemmelements 28 aufeinander zubewegt werden, so dass die Exzenterverstelleinrichtung 29 zwischen den Klemmarmen 34, 35 geklemmt werden kann. Hierzu wird das Klemmelement 28 beispielsweise durch einen der Klemmabschnitte 36, 37 hindurchgeführt und in den anderen der Klemmabschnitte 36, 37 eingeschraubt. Zwischen den Klemmabschnitten 36, 37 ist ein Spalt 38 vorgesehen, der mit Hilfe des Klemmelements 28 verkleinert werden kann, um die Exzenterverstelleinrichtung 29 in dem Exzenteraufnahmeabschnitt 23 zu klemmen.

Innenseitig weist der Exzenteraufnahmeabschnitt 23 eine rotationssymmetrisch zu der Mittelachse 33 aufgebaute Innenklemmfläche 39 auf. Die Innenklemmfläche 39 ist zylinderförmig. Die Innenklemmfläche 39 ist an dem Spalt 38 unterbrochen. Die Innenklemmfläche 39 ist innenseitig an den Klemmarmen 34, 35 vorgesehen und somit auf diese aufgeteilt. In der Orientierung der Fig. 3 nach vorne und hinten orientiert, weist der Exzenteraufnahmeabschnitt 23 jeweils eine Anlagefläche 40 auf, von denen in der Fig. 3 nur eine gezeigt ist. Die Anlagefläche 40 ist senkrecht zu der Innenklemmfläche 39 angeordnet.

An einem Übergang zwischen dem Exzenteraufnahmeabschnitt 23 und dem Basisabschnitt 24 ist eine Aufnahmebohrung 41 zum Aufnehmen des Exzenterverstellelements 26 in den Schwingarm 22 eingebracht. Die Aufnahmebohrung 41 ist zu der Innenklemmfläche 39 hin eröffnet. Mit anderen Worten ragt das Exzenterverstellelement 26 über die Innenklemmfläche 39 in Richtung der Mittelachse 33 hinaus.

Der rohrförmige Kopplungsabschnitt 25 ist senkrecht zu dem Basisabschnitt 24 orientiert. Der Kopplungsabschnitt 25 umfasst eine Symmetrie- oder Mittelachse 42, zu welcher der Kopplungsabschnitt 25 rotationssymmetrisch aufgebaut ist. Die Mittelachse 42 verläuft parallel zu der Mittelachse 33 und ist beabstandet von dieser angeordnet. Der Kopplungsabschnitt 25 umfasst eine mittige Bohrung 43, in welcher die zuvor erwähnte Drehstabfeder aufgenommen ist. Die Bohrung 43 kann innenseitig eine Verzahnung aufweisen, um die Drehstabfeder drehfest an dem Kopplungsabschnitt 25 festzulegen. Der Schwingarm 22 ist um die Mittelachse 42 drehbar an dem Schwingarmkopplungselement 30 gelagert. Verdreht sich der Schwingarm 22 um die Mittelachse 42, wird die Drehstabfeder tordiert. Somit kann eine Federung des Kettenlaufwerks 8 verwirklicht werden.

Außenseitig umfasst der Kopplungsabschnitt 25 eine Verzahnung 44, insbesondere in Form einer Keilwelle oder Zahnwelle. Auf die Verzahnung 44 kann ein Drehdämpfer aufgesetzt sein, der innerhalb des ersten Aufnahmeabschnitts 31 des Schwingarmkopplungselements 30 aufgenommen ist. Mit Hilfe des Drehdämpfers kann eine Dämpfung der Federwirkung der Drehstabfeder und damit auch des Kettenlaufwerks 8 verwirklicht werden.

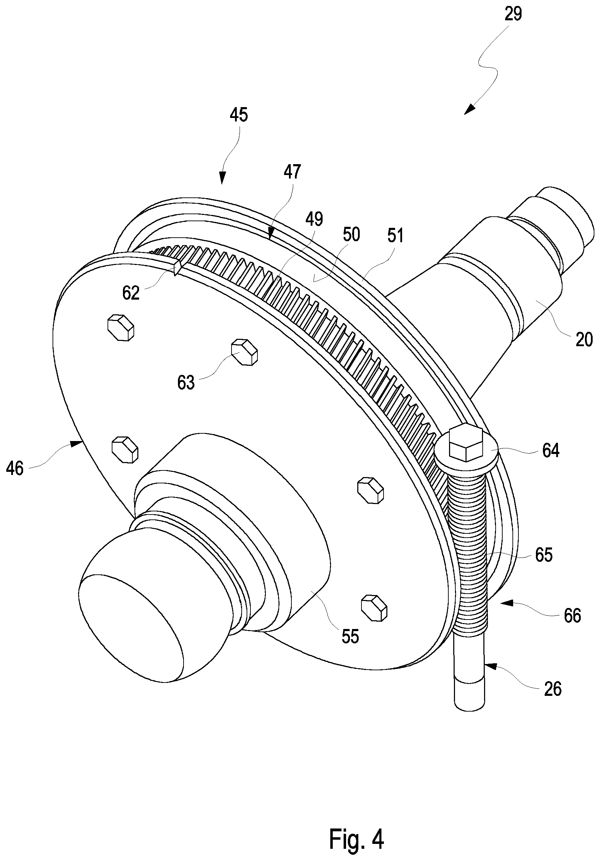

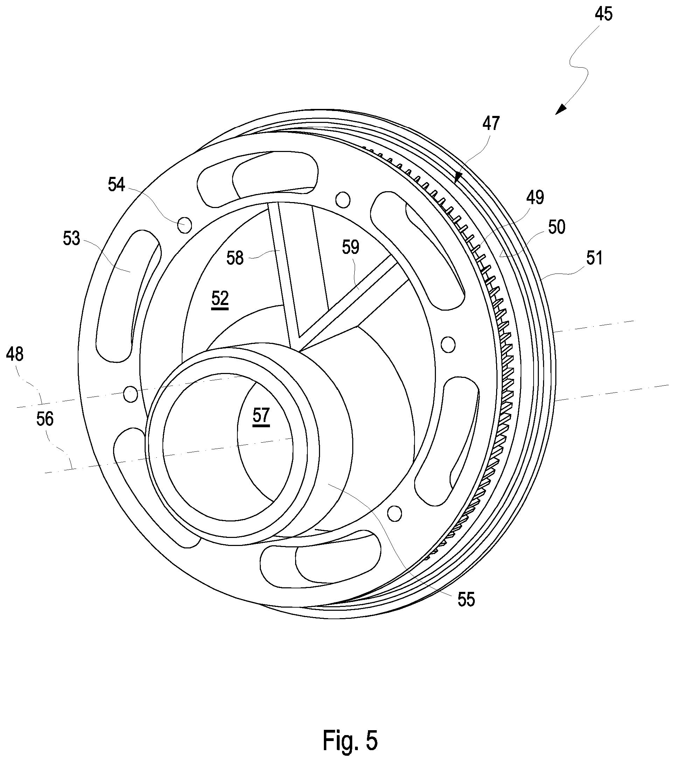

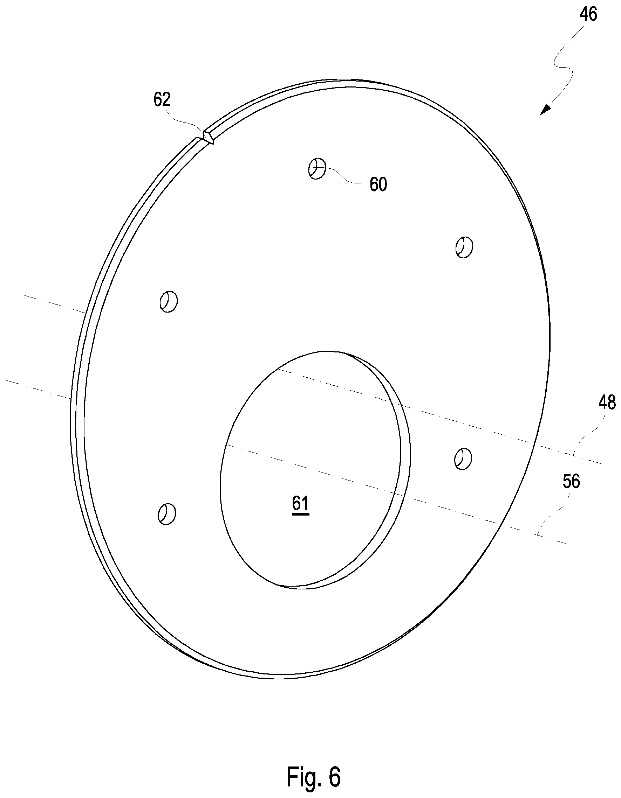

Die Fig. 4 zeigt eine schematische perspektivische Ansicht einer Ausführungsform einer wie zuvor erwähnten Exzenterverstelleinrichtung 29. Die Fig. 5 zeigt eine schematische perspektivische Ansicht einer Ausführungsform eines Exzenterelements 45 für die Exzenterverstelleinrichtung 29. Die Fig. 6 zeigt eine schematische perspektivische Ansicht eines Abdeckelements 46 für die Exzenterverstelleinrichtung 29. Nachfolgend wird auf die Fig. 4 bis 6 gleichzeitig Bezug genommen.

Die Exzenterverstelleinrichtung 29 umfasst das Exzenterelement 45, das Abdeckelement 46 sowie das Exzenterverstellelement 26. Außerdem kann die Exzenterverstelleinrichtung 29 auch die Rad- oder Laufrollenachse 20 aufweisen. Darüber hinaus kann auch der Exzenteraufnahmeabschnitt 23 des Schwingarms 22 als Teil der Exzenterverstelleinrichtung 29 angesehen werden. Mit Hilfe des Exzenterverstellelements 26 kann das Exzenterelement 45 mitsamt dem Abdeckelement 46 und der Rad- oder Laufrollenachse 20 in dem Exzenteraufnahmeabschnitt 23 des Schwingarms 22 verdreht werden.

Das in der Fig. 5 gezeigte Exzenterelement 45 umfasst einen ringförmigen Basisabschnitt 47, der rotationssymmetrisch zu einer Exzenterdrehachse 48 des Exzenterelements 45 aufgebaut ist. Die Exzenterdrehachse 48 kann identisch mit der Mittelachse 33 des Schwingarms 22 oder koaxial zu dieser angeordnet sein. Insbesondere kann sich das Exzenterelement 45 in dem Exzenteraufnahmeabschnitt 23 des Schwingarms 22 um die Exzenterdrehachse 48 und damit auch um die Mittelachse 33 drehen.

An dem Basisabschnitt 47 ist außenseitig eine vollständig um die Exzenterdrehachse 48 umlaufende Außenverzahnung 49 angebracht. In die Außenverzahnung 49 greift das Exzenterverstellelement 26 formschlüssig ein. Eine formschlüssige Verbindung entsteht durch ein Ineinander- oder Hintergreifen von zwei Bauteilen, vorliegend der Außenverzahnung 49 und dem Exzenterverstellelement 26.

Ferner weist der Basisabschnitt 47 eine benachbart zu der Außenverzahnung 49 angeordnete Außenklemmfläche 50, die der Innenklemmfläche 39 des Exzenteraufnahmeabschnitts 23 zugewandt ist, auf. Die Außenverzahnung 49 ist bezüglich der Außenklemmfläche 50 radial zurückgesetzt. Das Exzenterelement 45 kann mit seiner Außenklemmfläche 50 an der Innenklemmfläche 39 des Exzenteraufnahmeabschnitts 23 des Schwingarms 22 gelagert sein.

In der Orientierung der Fig. 5 rückseitig an dem Basisabschnitt 47 ist ein plattenförmiger Abdeckabschnitt 51 angebracht. Der Abdeckabschnitt 51 weist einen größeren Durchmesser als der Basisabschnitt 47 auf. Der Abdeckabschnitt 51 liegt an einer der Anlageflächen 40 des Exzenteraufnahmeabschnitts 23 des Schwingarms 22 an. Insbesondere liegt der Abdeckabschnitt 51 an der in der Orientierung der Fig. 3 rückseitig angeordneten Anlagefläche 40 des Exzenteraufnahmeabschnitt 23 an. Dabei ist zwischen dem Abdeckabschnitt 51 und der Anlagefläche 40 ein Dichtelement, beispielsweise in Form eines O-Rings, angeordnet. Hierzu kann in dem Abdeckabschnitt 51 eine Ringnut für das Dichtelement eingearbeitet sein.

Der ringförmige Basisabschnitt 47 umfasst eine mittige Ausnehmung 52, die rückseitig von dem Abdeckabschnitt 51 verschlossen ist. Ferner kann der Basisabschnitt mehrere Aussparungen 53 aufweisen, von denen in der Fig. 5 nur eine mit einem Bezugszeichen versehen ist. Die Aussparungen 53 können gleichmäßig um die Exzenterdrehachse 48 herum verteilt angeordnet sein. Die Ausnehmung 52 und die Aussparungen 53 dienen der Gewichtsersparnis. Ferner sind in den Basisabschnitt 47 Gewindebohrungen 54 eingebracht, von denen in der Fig. 5 ebenfalls nur eine mit einem Bezugszeichen versehen ist. Die Gewindebohrungen 54 sind ebenfalls gleichmäßig um die Exzenterdrehachse 48 herum verteilt angeordnet.

Zu der Exzenterdrehachse 48 versetzt ist eine Achsaufnahme 55 des Exzenterelements 45 angeordnet. In der Achsaufnahme 55 ist die Rad- oder Laufrollenachse 20 aufgenommen. Die Achsaufnahme 55 ist hohlzylinderförmig oder rohrförmig. Die Achsaufnahme 55 ist rotationssymmetrisch zu einer Symmetrie- oder Mittelachse 56 aufgebaut. Die Mittelachse 56 ist zu der Exzenterdrehachse 48 versetzt angeordnet. Mit anderen Worten sind die Exzenterdrehachse 48 und die Mittelachse 56 parallel zueinander und beabstandet voneinander angeordnet.

Die Achsaufnahme 55 umfasst einen zylinderförmigen Durchbruch 57, in welchem die Rad- oder Laufrollenachse 20 aufgenommen und gelagert ist. Der Durchbruch 57 durchbricht das Exzenterelement 45 vollständig. Die Rad- oder Laufrollenachse 20 ist rotationssymmetrisch zu der Mittelachse 56 aufgebaut. Die Rad- oder Laufrollenachse 20 kann in den Durchbruch 57 eingepresst oder eingeschrumpft sein.

Die Achsaufnahme 55 ist innerhalb der Ausnehmung 52 angeordnet und außermittig an dieser platziert. Dabei ist die Achsaufnahme 55 mit dem Abdeckabschnitt 51 sowie zumindest abschnittsweise mit dem Basisabschnitt 47 verbunden. Die Achsaufnahme 55 ist zusätzlich über innerhalb der Ausnehmung 52 angeordnete Rippen 58, 59 an den Basisabschnitt 47 angekoppelt.

Das Exzenterelement 45 ist ein einstückiges, insbesondere ein materialeinstückiges, Bauteil. "Einstückig" oder "einteilig" heißt vorliegend, dass das Exzenterelement 45 nicht aus unterschiedlichen Unterbauteilen zusammengesetzt ist, sondern, dass der Basisabschnitt 47, der Abdeckabschnitt 51, die Achsaufnahme 55 und die Rippen 58, 59 ein gemeinsames Bauteil, nämlich das Exzenterelement 45, bilden. "Materialeinstückig" heißt vorliegend, dass das Exzenterelement 45 durchgehend aus dem gleichen Werkstoff gefertigt ist. Beispielsweise kann das Exzenterelement 45 aus einer Aluminiumlegierung oder aus einer Stahllegierung gefertigt sein.

Das in der Fig. 6 gezeigte Abdeckelement 46 ist plattenförmig. Das Abdeckelement 46 ist ebenfalls rotationssymmetrisch zu der Exzenterdrehachse 48 aufgebaut. Das Abdeckelement 46 liegt in der Orientierung der Fig. 3 an der vorderseitigen Anlagefläche 40 des Exzenteraufnahmeabschnitts 23 des Schwingarms 22 an. Dabei ist zwischen dem Abdeckelement 46 und der Anlagefläche 40 ebenfalls ein Dichtelement, beispielsweise in Form eines O-Rings, angeordnet. Zur Aufnahme des Dichtelements kann in das Abdeckelement 46 eine Ringnut eingearbeitet sein. Das Abdeckelement 46 umfasst mehrere Bohrungen 60, von denen in der Fig. 6 nur eine mit einem Bezugszeichen versehen ist.

Das Abdeckelement 46 umfasst ferner einen Durchbruch 61, durch den die Rad- oder Laufrollenachse 20 hindurchgeführt ist. Ferner ist auch die Achsaufnahme 55 durch den Durchbruch 61 hindurchgeführt. Der Durchbruch 61 ist demgemäß rotationssymmetrisch zu der Mittelachse 56 aufgebaut. Ferner umfasst das Abdeckelement 46 einen V-förmigen Ausschnitt 62, der in eine umfängliche Außenfläche des Abdeckelements 46 eingearbeitet ist.

Nun zurückkehrend zu der Fig. 4 ist das Abdeckelement 46 mit Hilfe mehrerer Befestigungselemente 63, von denen in der Fig. 4 nur eines mit einem Bezugszeichen versehen ist, mit dem Exzenterelement 45 verbunden. Die Befestigungselemente 63 sind Schrauben. Hierbei sind die Befestigungselemente 63 durch die Bohrungen 60 des Abdeckelements 46 hindurchgeführt und in die Gewindebohrungen 54 des Exzenterelements 45 eingeschraubt.

In einem montierten Zustand der Exzenterverstelleinrichtung 29 liegen die Anlageflächen 40 des Exzenteraufnahmeabschnitts 23 des Schwingarms 22 zwischen dem Abdeckelement 46 und dem Abdeckabschnitt 51 des Exzenterelements 45, wobei die Außenklemmfläche 50 des Exzenterelements 45 der Innenklemmfläche 39 des Exzenteraufnahmeabschnitts 23 zugewandt ist.

Nun zurückkehrend zu dem Exzenterverstellelement 26 weist dieses einen in der Fig. 4 gezeigten Greifabschnitt 64, insbesondere einen Außensechskant, auf, der von einem Standardwerkzeug, wie beispielsweise einer Akkuratsche, einer Handratsche oder einem Gabelschlüssel, gegriffen werden kann, um das Exzenterverstellelement 26 gegenüber dem Schwingarm 22 verdrehen zu können. Mit anderen Worten ist das Standardwerkzeug ein Handwerkzeug. Das Standardwerkzeug kann in dem gepanzerten Fahrzeug 1 mitgeführt werden.

Aus dem Greifabschnitt 64 erstreckt sich in der Orientierung der Fig. 4 unterseitig ein Spindelabschnitt 65 heraus, der formschlüssig in die Außenverzahnung 49 des Exzenterelements 45 eingreift. Die Außenverzahnung 49 und das Exzenterverstellelement 26 bilden dabei ein selbsthemmendes Schneckengetriebe 66 der Exzenterverstelleinrichtung 29. Das Schneckengetriebe 66 weist beispielsweise ein Übersetzungsverhältnis von 1:179 auf.

Nachfolgend wird die Funktionalität der Schwingarmanordnung 15 anhand der Fig. 2 erläutert. Die nachfolgend anhand einer Schwingarmanordnung 15 erläuterte Vorgehensweise ist für alle Schwingarmanordnungen 15 des Kettenlaufwerks 8 durchzuführen. Mit Hilfe der Exzenterverstelleinrichtung 29 kann die Rad- oder Laufrollenachse 20 von einer in der Fig. 2 mit durchgezogenen Linien dargestellten Einsatzposition, Fahrposition oder Betriebsposition P1 in eine mit gestrichelten Linien dargestellte und mit dem Bezugszeichen 20' versehene Transportposition P2 verbracht werden.

Die Betriebsposition P1 und die Transportposition P2 unterscheiden sich dadurch voneinander, dass in der Transportposition P2 die Rad- oder Laufrollenachse 20 oder die Mittelachse 56 näher an der Oberseite 4 der Fahrzeugwanne 2 angeordnet ist als in der Betriebsposition P1. Mit anderen Worten ist eine Gesamthöhe des gepanzerten Fahrzeugs 1 in der Transportposition P2 kleiner als in der Betriebsposition P1.

In der Betriebsposition P1 ist das Exzenterelement 45 mit Hilfe der Klemmarme 34, 35 in dem Exzenteraufnahmeabschnitt 23 des Schwingarms 22 geklemmt. Es liegt eine kraftschlüssige Verbindung zwischen der Innenklemmfläche 39 des Exzenteraufnahmeabschnitts 23 und der Außenklemmfläche 50 des Exzenterelements 45 vor. Die pfeilförmige Markierung 27 zeigt auf den Ausschnitt 62 des Abdeckelements 46, so dass die Betriebsposition P1 zuverlässig erkannt werden kann.

Die Verstellung von der Betriebsposition P1 in die Transportposition P2 wird dadurch eingeleitet, dass zunächst das Klemmelement 28 gelöst wird. Auch dies kann mit einem Standardwerkzeug, insbesondere mit dem gleichen Standardwerkzeug, mit dem auch das Exzenterverstellelement 26 verdreht wird, erfolgen. Die zuvor erwähnte kraftschlüssige Verbindung wird gelöst.

Anschließend wird mit Hilfe des Standardwerkzeugs das Exzenterverstellelement 26 derart verdreht, dass sich das Exzenterelement 45 um die Exzenterdrehachse 48 innerhalb des Exzenteraufnahmeabschnitts 23 des Schwingarms 22 verdreht. Hierdurch wandert die Mittelachse 56 mitsamt der Rad- oder Laufrollenachse 20 in der Orientierung der Fig. 2 von unten nach oben in Richtung der Oberseite 4 der Fahrzeugwanne 2. Die Rad- oder Laufrollenachse 20 oder die Mittelachse 56 bewegt sich dabei nicht linear entlang der z-Richtung z, sondern entlang einer in der Fig. 2 dargestellten gekrümmten Bahnkurve 67.

Ein erforderliches Drehmoment zum Verstellen des Exzenterverstellelement 26 liegt vorzugsweise unter 50 Nm. Das Exzenterverstellelement 26 wird so lange verdreht, bis sich die Rad- oder Laufrollenachse 20 in der Transportposition P2 befindet. Hat das gepanzerte Fahrzeug 1 schon vor einem Erreichen der Transportposition P2 eine ausreichend geringe Höhe, kann der Absenkvorgang auch an einer beliebigen Zwischenposition zwischen der Betriebsposition P1 und der Transportposition P2 gestoppt werden. Die Höhenverstellung ist somit stufenlos. Von der Betriebsposition P1 bis zu der Transportposition P2 ist eine Absenkung des gepanzerten Fahrzeugs 1 um 100 mm bis 120 mm möglich.

Anschließend wird das Exzenterelement 45 mit Hilfe des Klemmelements 28 wieder in dem Exzenteraufnahmeabschnitt 23 des Schwingarms 22 geklemmt. Hierbei legt sich die Innenklemmfläche 39 des Exzenteraufnahmeabschnitts 23 wieder an der Außenklemmfläche 50 des Exzenterelements 45 an, so dass das Exzenterelement 45 kraftschlüssig in der Transportposition P2 gehalten wird. Eine mechanische Belastung des Exzenterverstellelements 26 wird dabei aufgrund der Klemmung des Exzenterelements 45 in dem Exzenteraufnahmeabschnitt 23 sowohl in der Betriebsposition P1 als auch in der Transportposition P2 verhindert. Bei einem Einsatz einer Akkuratsche kann eine Schwingarmanordnung 15 in etwa einer Minute verstellt werden. Hierzu kommt etwa eine Minute für das Lösen und Anziehen des Klemmelements 28.

Mit Hilfe des zuvor erwähnten Endanschlagdämpfers kann eine Beschädigung der Schwingarmanordnung 15 in der eingefederten Position des Schwingarms 22 sowohl in der Betriebsposition P1 als auch in der Transportposition P2 verhindert werden. In der ausgefederten Position des Schwingarms 22 kontaktiert der Endanschlagdämpfer die Rad- oder Laufrollenachse 20 noch nicht. Sobald der Schwingarm 22 über einen vorbestimmten Weg eingefedert ist, kontaktiert der Endanschlagdämpfer die Rad- oder Laufrollenachse 20. Insbesondere ist die Kinematik des Kettenlaufwerks 8 in der Transportposition P2 unverändert.

Die Schwingarmanordnung 15 mit der Exzenterverstelleinrichtung 29 bietet robuste Technik, die einfach bedienbar ist. Gepanzerte Fahrzeuge ohne eine derartige Schwingarmanordnung 15 können einfach durch einen Austausch vorhandener Schwingarme nachgerüstet werden. Es ist ein relativ schnelles Absenken für einen Bahntransport möglich. Die Kinematik des Kettenlaufwerks 8 bleibt unverändert. Es ergibt sich ein geringes Mehrgewicht von etwa 10 kg pro Schwingarmanordnung 15. Die Schwingarmanordnung 15 bietet eine kostengünstige Lösung zum Absenken des gepanzerten Fahrzeugs 1 für den Bahntransport.

Obwohl die vorliegende Erfindung anhand von Ausführungsbeispielen beschrieben wurde, ist sie vielfältig modifizierbar.

### BEZUGSZEICHENLISTE

- 1: gepanzertes Fahrzeug
- 2: Fahrzeugwanne
- 3: Innenraum
- 4: Oberseite
- 5: Umgebung
- 6: Turm
- 7: Bewaffnung
- 8: Kettenlaufwerk
- 9: Untergrund
- 10: Fahrtrichtung
- 11: Kette
- 12: Antriebsrolle
- 13: Kettenlaufrolle
- 14: Umlenkrolle
- 15: Schwingarmanordnung
- 16: Laufrollenkörper
- 17: Laufrollenbandage
- 18: Laufrollenbandage
- 19: Ausnehmung
- 20: Rad- oder Laufrollenachse
- 20': Rad- oder Laufrollenachse
- 21: Laufrollennabe
- 22: Schwingarm
- 23: Exzenteraufnahmeabschnitt
- 24: Basisabschnitt
- 25: Kopplungsabschnitt
- 26: Exzenterverstellelement
- 27: Markierung
- 28: Klemmelement
- 29: Exzenterverstelleinrichtung
- 30: Schwingarmkopplungselement
- 31: Aufnahmeabschnitt
- 32: Aufnahmeabschnitt
- 33: Mittelachse
- 34: Klemmarm
- 35: Klemmarm
- 36: Klemmabschnitt
- 37: Klemmabschnitt
- 38: Spalt
- 39: Innenklemmfläche
- 40: Anlagefläche
- 41: Aufnahmebohrung
- 42: Mittelachse
- 43: Bohrung
- 44: Verzahnung
- 45: Exzenterelement
- 46: Abdeckelement
- 47: Basisabschnitt
- 48: Exzenterdrehachse
- 49: Außenverzahnung
- 50: Außenklemmfläche
- 51: Abdeckabschnitt
- 52: Ausnehmung
- 53: Aussparung
- 54: Gewindebohrung
- 55: Achsaufnahme
- 56: Mittelachse
- 57: Durchbruch
- 58: Rippe
- 59: Rippe
- 60: Bohrung
- 61: Durchbruch
- 62: Ausschnitt
- 63: Befestigungselement
- 64: Greifabschnitt
- 65: Spindelabschnitt
- 66: Schneckengetriebe
- 67: Bahnkurve

- g: Schwerkraftrichtung
- P1: Betriebsposition
- P2: Transportposition
- x: x-Richtung
- y: y-Richtung
- z: z-Richtung

## Patentansprüche

1. Gepanzertes Fahrzeug (1), insbesondere Kampfpanzer, mit
einer Fahrzeugwanne (2),
einem schwenkbar an der Fahrzeugwanne (2) angebrachten Schwingarm (22),
einer mit dem Schwingarm (22) gekoppelten Rad- oder Laufrollenachse (20), und
einer Exzenterverstelleinrichtung (29) zum Verstellen der Rad- oder Laufrollenachse (20) von einer Betriebsposition (P1) in eine Transportposition (P2) und umgekehrt mit Hilfe eines an dem Schwingarm (22) gelagerten Exzenterelements (45),
wobei die Rad- oder Laufrollenachse (20) in der Transportposition (P2) näher an einer Oberseite (4) der Fahrzeugwanne (2) angeordnet ist als in der Betriebsposition (P1).

2. Gepanzertes Fahrzeug nach Anspruch 1,
**dadurch gekennzeichnet,**
**dass** das Exzenterelement (45) eine außermittige Achsaufnahme (55) aufweist, in der die Rad- oder Laufrollenachse (20) aufgenommen ist.

3. Gepanzertes Fahrzeug nach Anspruch 2,
**dadurch gekennzeichnet,**
**dass** das Exzenterelement (45) einen ringförmigen Basisabschnitt (47) aufweist, wobei die Achsaufnahme (55) innerhalb des Basisabschnitts (47) angeordnet ist, und wobei die Achsaufnahme (55) mit Hilfe von Rippen (58, 59) an den Basisabschnitt (47) angebunden ist.

4. Gepanzertes Fahrzeug nach Anspruch 2 oder 3,
**dadurch gekennzeichnet,**
**dass** der Achsaufnahme (55) und der Rad- oder Laufrollenachse (20) eine gemeinsame Mittelachse (56) zugeordnet ist, wobei dem Exzenterelement (45) eine Exzenterdrehachse (48) zugeordnet ist, um die das Exzenterelement (45) drehbar an dem Schwingarm (22) gelagert ist, und wobei die Mittelachse (56) exzentrisch zu der Exzenterdrehachse (48) angeordnet ist.

5. Gepanzertes Fahrzeug nach Anspruch 4,
**dadurch gekennzeichnet,**
**dass** das Exzenterelement (45) eine um die Exzenterdrehachse (48) umlaufende Außenverzahnung (49), insbesondere eine Schrägverzahnung, aufweist, wobei die Exzenterverstelleinrichtung (29) ein Exzenterverstellelement (26) aufweist, das in die Außenverzahnung (49) eingreift, und wobei das Exzenterverstellelement (26) drehbar an dem Schwingarm (22) gelagert ist.

6. Gepanzertes Fahrzeug nach Anspruch 5,
**dadurch gekennzeichnet,**
**dass** das Exzenterverstellelement (26) und die Außenverzahnung (49) ein selbsthemmendes Schneckengetriebe (66) bilden.

7. Gepanzertes Fahrzeug nach Anspruch 6,
**dadurch gekennzeichnet,**
**dass** das Schneckengetriebe (66) innerhalb des Schwingarms (22) angeordnet ist.

8. Gepanzertes Fahrzeug nach einem der Ansprüche 5 - 7,
**dadurch gekennzeichnet,**
**dass** Exzenterverstellelement (26) einen Greifabschnitt (64), insbesondere einen Außensechskant, aufweist, der mit Hilfe eines Standardwerkzeugs greifbar ist.

9. Gepanzertes Fahrzeug nach einem der Ansprüche 1 - 8,
**dadurch gekennzeichnet,**
**dass** der Schwingarm (22) einen Exzenteraufnahmeabschnitt (23) aufweist, an dem das Exzenterelement (45) gelagert ist, wobei der Exzenteraufnahmeabschnitt (23) in einen ersten Klemmarm (34) und einen zweiten Klemmarm (35) unterteilt ist, und wobei der erste Klemmarm (34) und/oder der zweite Klemmarm (35) zum kraftschlüssigen Festlegen des Exzenterelements (45) an dem Exzenteraufnahmeabschnitt (23) mit Hilfe eines Klemmelements (28) elastisch verformbar sind.

10. Gepanzertes Fahrzeug nach Anspruch 9,
**dadurch gekennzeichnet,**
**dass** das Exzenterelement (45) eine zylinderförmige Außenklemmfläche (50) aufweist, wobei der Exzenteraufnahmeabschnitt (23) eine zylinderförmige Innenklemmfläche (39) aufweist, und wobei das Exzenterelement (45) mit Hilfe der Außenklemmfläche (50) an der Innenklemmfläche (39) gelagert ist.

11. Gepanzertes Fahrzeug nach Anspruch 9 oder 10,
**dadurch gekennzeichnet,**
**dass** die Exzenterverstelleinrichtung (29) ein lösbar mit dem Exzenterelement (45) verbundenes Abdeckelement (46) aufweist, wobei der Exzenteraufnahmeabschnitt (23) zumindest abschnittsweise zwischen dem Exzenterelement (45) und dem Abdeckelement (46) angeordnet ist.

12. Gepanzertes Fahrzeug nach Anspruch 11,
**dadurch gekennzeichnet,**
**dass** das Exzenterelement (45) und das Abdeckelement (46) fluiddicht gegenüber dem Exzenteraufnahmeabschnitt (23) abgedichtet sind.

13. Gepanzertes Fahrzeug nach Anspruch 11 oder 12,
**dadurch gekennzeichnet,**
**dass** das Abdeckelement (46) einen außermittigen Durchbruch (61) aufweist, durch den die Rad- oder Laufrollenachse (20) hindurchgeführt ist.

14. Gepanzertes Fahrzeug nach einem der Ansprüche 1 - 13,
**dadurch gekennzeichnet,**
**dass** der Schwingarm (22) eine Markierung (27) aufweist, an der ablesbar ist, ob sich die Rad- oder Laufrollenachse (20) in der Betriebsposition (P1) oder in der Transportposition (P2) befindet.

15. Gepanzertes Fahrzeug nach einem der Ansprüche 1 - 14,
**gekennzeichnet durch**
eine Kettenlaufrolle (13), die drehbar an der Rad- oder Laufrollenachse (20) gelagert ist, wobei die Exzenterverstelleinrichtung (29) innerhalb der Kettenlaufrolle (13) angeordnet ist.
